# EUROPÄISCHE PATENTSCHRIFT

(11) **EP 0 535 309 B1**
(45) Veröffentlichungstag und Bekanntmachung des Hinweises auf die Patenterteilung: **17.05.1995**
(21) Anmeldenummer: 92109355.5
(22) Anmeldetag: 03.06.1992
(51) Int. Cl.: G01M 3/28

(54) **Vorrichtung zum Messen der Leckmenge eines Gasleitungsabschnittes**
Apparatus for measuring the leakage of a section of a gas conduit
Dispositif pour mesurer le débit de fuite d'un segment d'une canalisation de gaz

(30) Priorität: 16.08.1991 DE 4127104
(43) Veröffentlichungstag der Anmeldung: 07.04.1993
(73) Patentinhaber: Kräwer, Hans-Peter, D-54292 Trier (DE)
(72) Erfinder: Kräwer, Hans-Peter, D-54292 Trier (DE)
(74) Vertreter: Serwe, Karl-Heinz, Dipl.-Ing.

(56) Entgegenhaltungen:
- EP-A- 0 066 716
- DE-A- 2 946 654
- DE-C- 3 830 356
- US-A- 3 360 981

## Beschreibung

Die Erfindung betrifft eine Vorrichtung zum Messen der Leckmenge eines Gasleitungsabschnittes bei gleichbleibendem Prüfdruck in dem zu prüfenden Gasleitungsabschnitt, bestehend aus Druckzylinder, Kolben, Kolbenstange und Druckanzeigevorrichtung, wobei nach Anschluß des Druckzylinders an den zu prüfenden Gasleitungsabschnitt und nach Füllen des Druckzylinders mit dem in der Gasleitung befindlichen Medium der zu prüfende Gasleitungsabschnitt von der Gasleitung abgeschlossen, ein von der Druckanzeigevorrichtung angezeigter Druckverlust im Gasleitungsabschnitt über eine bestimmte Zeit durch Verschieben des Druckkolbens ausgeglichen und durch eine an dem Druckzylinder angeordnete Skala die Leckmenge durch die Stellung des Druckkolbens angezeigt wird.

Diese aus dem deutschen Patent 38 30 356 bekannte Vorrichtung dient durch das Messen der Leckmenge einer Gasleitung zur Prüfung der Dichtigkeit der Gasleitung bei Betriebsdruck. Nach der Höhe der Leckgasmenge bestimmt sich dann die Gebrauchsfähigkeit der Anlage.

Um eine Aussage über die Gebrauchsfähigkeit der Gasleitung machen zu können, muß die Messung über eine bestimmte Zeit durchgeführt werden. Daher ist zu Beginn der Messung eine Zeitmesseinrichtung zu starten und nach Ablauf der vorgegebenen Zeit die Messung zu beenden und der Messwert abzulesen.

Als nachteilig hat sich herausgestellt, daß zu Beginn der Messung gleichzeitig die Druckanzeigevorrichtung beobachtet und die Zeitmesseinrichtung gestartet werden müssen. Dies führt dazu, daß entweder der Beginn der Messung nicht korrekt festgelegt wird oder bei Beginn der Messung der vorgesehene Druck nicht korrekt eingehalten wird.

Die Aufgabe der Erfindung besteht daher darin, eine Vorrichtung der eingangs genannten Art derart weiterzubilden, daß mit Beginn der Messung gleichzeitig auch die Zeitmesseinrichtung gestartet wird.

Die Aufgabe wird dadurch gelöst, daß bei einer Vorrichtung der eingangs genannten Art im Druckzylindermantel eine Durchtrittsöffnung angeordnet ist, die in Nullstellung des Druckkolbens von einer im Druckkolben unter der Spannung einer Feder stehenden Kugel zur Betätigung einer am Druckzylindermantel angeordneten Zeitmesseinrichtung durchragt ist.

Vorteilhaft ist der Durchmesser der Ausnehmung an der Innenseite des Druckzylindermantels kleiner als der Kugeldurchmesser.

Vorzugsweise ist im Druckzylindermantel eine in Längsrichtung des Druckzylinders verlaufende schlitzartige Ausnehmung angeordnet, in der eine am Druckkolben angeordnete Nase verschiebbar geführt ist.

Vorzugsweise ist die Nase als Skalenanzeiger für die Skala ausgebildet.

Vorteilhaft ist der Druckkolben innen hohl ausgebildet und weist an seinem der Druckfläche abgewandten Ende ein Innengewinde auf, in dem das Außengewinde der Kolbenstange schraubbar gehalten ist.

Vorzugsweise ist das aus dem Druckkolben ragende Ende der Kolbenstange fest mit einer Kurbel, einem Handhebel, einem Betätigungsrad od.dgl. verbunden, das am Druckzylinder drehbar gelagert ist.

Die Erfindung ist in den Zeichnungen beispielhaft dargestellt. Es zeigen:
- Fig. 1: ein Ausführungsbeispiel einer erfindungsgemäßen Vorrichtung zu Beginn einer Messung,
- Fig. 2: die Vorrichtung nach einer Messung,
- Fig. 3: den Druckzylinder mit Druckkolben im Querschnitt,
- Fig. 4: den Druckzylinder im Längsschnitt durch die Startvorrichtung für eine Zeitmesseinrichtung in Anfangstellung und
- Fig. 5: den Druckzylinder nach Fig. 4 in Startstellung für die Zeitmesseinrichtung.

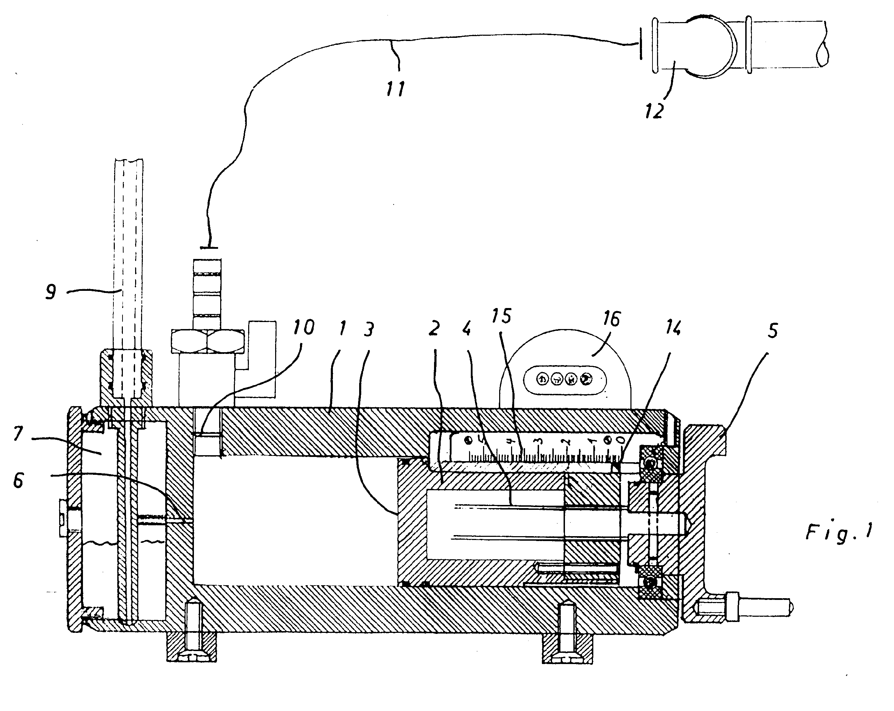

Nach den Fig. 1 bis 3 weist das Ausführungsbeispiel der erfindungsgemäßen Vorrichtung einen Druckzylinder 1 auf, in dem ein Druckkolben 2 verschiebbar geführt ist. Der Druckkolben 2 ist innen hohl und weist an seinem der Druckfläche 3 abgewandten Ende eine zentrale Durchtrittsöffnung mit einem Innengewinde auf, in dem eine Kolbenstange 4 mit ihrem Außengewinde schraubbar geführt ist.

Die Kolbenstange 4 ist an ihrem aus dem Druckkolben 2 ragenden Ende fest mit einem Betätigungsrad 5 verbunden, das am Druckzylinder 1 drehbar gelagert ist. Durch Betätigen des Betätigungsrades 5 kann der Druckkolben 2 im Druckzylinder 1 hin und her bewegt werden.

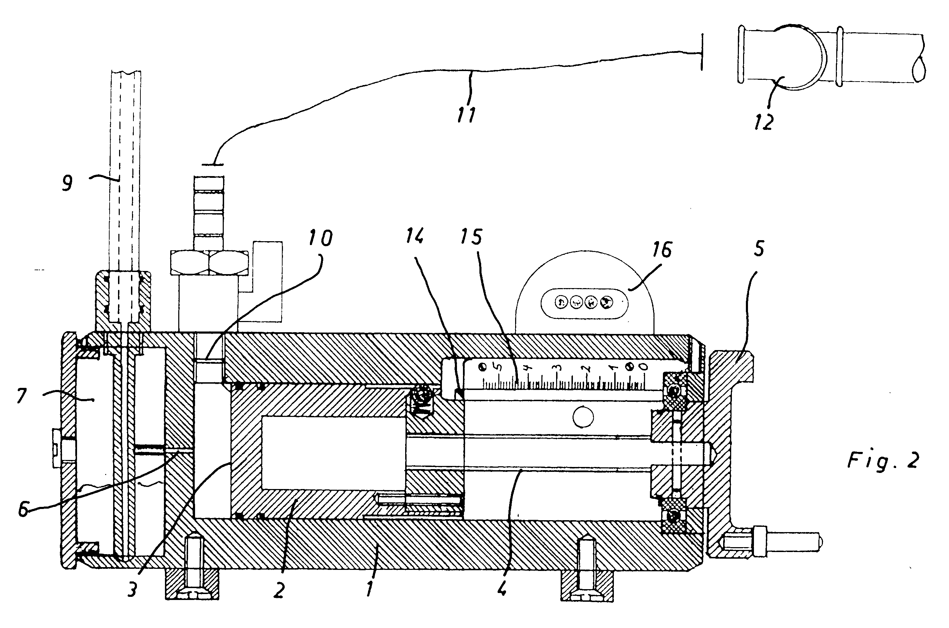

Wie die Fig. 1 und 2 ferner zeigen, steht der Druckzylinder 1 über eine Durchtrittsöffnung 6 mit einem Behälter 7 in Verbindung, in dem eine Anzeigeflüssigkeit angeordnet ist, die über ein Anzeigerohr 9 den im Druckzylinder herrschenden Druck anzeigt.

Im Druckzylinder 1 ist eine weitere Durchtrittsöffnung 10 angeordnet, über die in bekannter Weise der Druckzylinder mit einer zu prüfenden Gasleitung 12 über einen Schlauch 11 verbindbar ist.

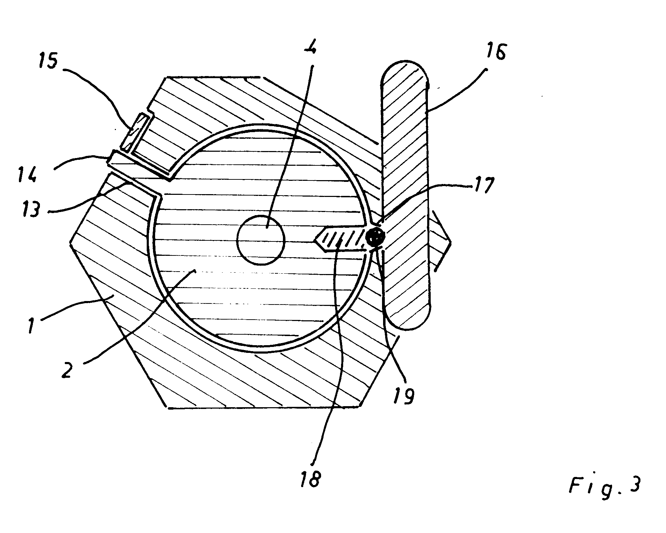

Wie ferner die Fig. 1 bis 3 zeigen, ist im Druckzylindermantel eine in Längsrichtung des Druckzylinders 1 verlaufende schlitzartige Ausnehmung 13 (Fig. 3) angeordnet, in der eine am Druckkolben 2 angeordnete Nase 14 verschiebbar geführt ist, so daß eine Drehung des Druckkolbens 2 verhindert ist. Wie die Fig. 1 bis 3 ferner zeigen, zeigt die Nase 14 die Stellung das Druckkolbens 2 auf einer am Druckzylinder 1 angeordneten Skala 15 an.

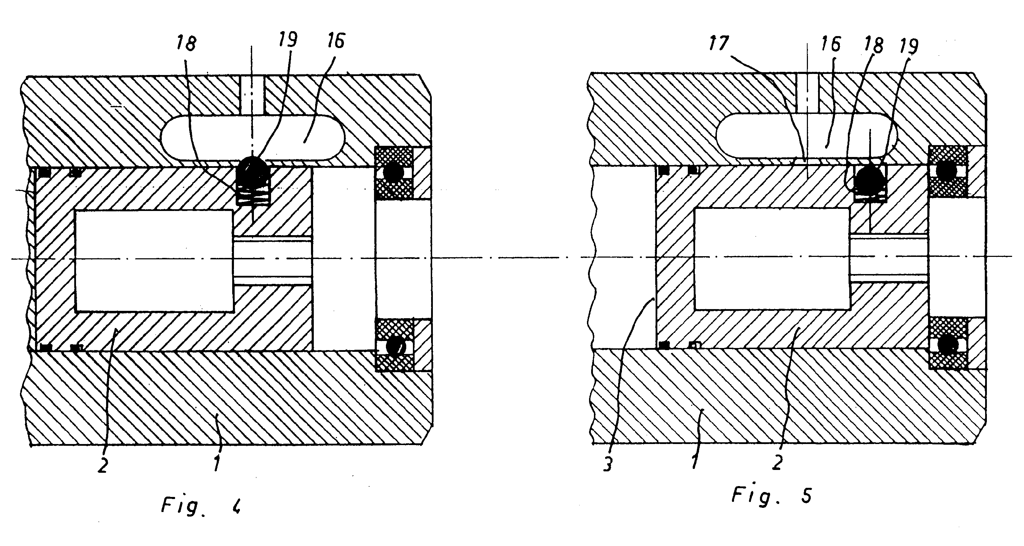

Wie insbesondere die Fig. 3 bis 5 zeigen, ist am Druckzylinder 1 eine Zeitmesseinrichtung 16 angeordnet. Im Druckzylinder 1 ist eine Durchtrittsöffnung 17 vorgesehen, die in Nullstellung des Druckkolbens 2 von einer im Druckkolben unter der Spannung der Feder 18 stehenden Kugel 19 teilweise durchragt ist, wie dies in Fig. 4 dargestellt ist, so daß eine nicht dargestellte Startvorrichtung der Zeitmesseinrichtung 16 betätigt ist.

Der Innendurchmesser der Durchtrittsöffnung 17 ist an der Innenseite des Druckzylindermantels kleiner als der Durchmesser der Kugel 19, so daß die Kugel nicht vollständig durch die Durchtrittsöffnung durchtreten kann.

Zu Beginn einer Messung befindet sich der Druckkolben 2 in der in Fig. 1 und 5 dargestellten Ausgangsstellung. Nachdem der Druckzylinder 1 in bekannter Weise mit der zu prüfenden Gasleitung 12 verbunden ist, wird durch Betätigen des Betätigungsrades 5 der gewünschte Messdruck im Druckzylinder 1 eingestellt, wobei dazu lediglich das Anzeigerohr 9 beobachtet werden muß. Durchgleitet der Druckkolben 2 die in Fig. 4 dargestellte Nullstellung, so wird selbsttätig die Zeitmesseinrichtung 16 gestartet, so daß nunmehr durch weitere Betätigung des Betätigungsrades 5 der Prüfdruck in bekannter Weise konstant gehalten werden kann.

Vorteilhaft wird das Ende der Messung durch ein akustisches oder optisches Signal der Zeitmesseinrichtung angezeigt, so daß nunmehr mit Hilfe der Nase 14 auf der Skala 15 das Messergebnis abgelesen werden kann.

## Patentansprüche

1. Vorrichtung zum Messen der Leckmenge eines Gasleitungsabschnittes bei gleichbleibendem Prüfdruck in dem zu prüfenden Gasleitungsabschnitt, bestehend aus Druckzylinder (1), Druckkolben (2), Kolbenstange (4) und Druckanzeigevorrichtung (9), wobei nach Anschluß des Druckzylinders an den zu prüfenden Gasleitungsabschnitt (12) und nach Füllen des Druckzylinders mit dem in der Gasleitung befindlichen Medium der zu prüfende Gasleitungsabschnitt von der Gasleitung abgeschlossen, ein von der Druckanzeigevorrichtung angezeigter Druckverlust im Gasleitungsabschnitt über eine bestimmte Zeit durch Verschieben des Druckkolbens (2) ausgeglichen und durch eine an dem Druckzylinder (1) angeordnete Skala (15) die Leckmenge durch die Stellung des Druckkolbens (2) angezeigt wird, dadurch gekennzeichnet, daß im Druckzylindermantel eine Durchtrittsöffnung (17) angeordnet ist, die in Nullstellung des Druckkolbens (2) von einer im Druckkolben unter der Spannung einer Feder (18) stehenden Kugel (19) zur Betätigung einer am Druckzylindermantel angeordneter Zeitmesseinrichtung (16) durchragt ist.

2. Vorrichtung nach Anspruch 1, dadurch gekennzeichnet, daß der Durchmesser der Durchtrittsöffnung (17) an der Innenseite des Druckzylindermantels kleiner als der Kugeldurchmesser ist.

3. Vorrichtung nach Anspruch 1, dadurch gekennzeichnet, daß im Druckzylindermantel eine in Längsrichtung des Druckzylinders (1) verlaufende schlitzartige Ausnehmung (13) angeordnet ist, in der eine am Druckkolben (2) angeordnete Nase (14) verschiebbar geführt ist.

4. Vorrichtung nach Anspruch 3, dadurch gekennzeichnet, daß die Nase (14) als Skalenanzeiger für die Anzeigeskala (15) ausgebildet ist.

5. Vorrichtung nach einem der Ansprüche 1 bis 4, dadurch gekennzeichnet, daß der Druckkolben (2) innen hohl ausgebildet ist und an seinem der Druckfläche (3) abgewandten Ende ein Innengewinde aufweist, in dem das Außengewinde der Kolbenstange (4) schraubbar gehalten ist.

6. Vorrichtung nach Anspruch 5, dadurch gekennzeichnet, daß das aus dem Druckkolben (2) ragende Ende der Kolbenstange (4) fest mit einer Kurbelstange, einer Handkurbel, einem Betätigungsrad (5) od.dgl. verbunden ist, das am Druckzylinder (1) drehbar gelagert ist.

## Claims

1. Apparatus for measuring the amount of leakage from a section of gas line at a constant test pressure in the section of gas line being tested, comprising a pressure cylinder (1), pressure piston (2), piston rod (4) and pressure indicating unit (9), where, the pressure cylinder having been connected to the section of gas line that is to be tested (12) and the pressure cylinder having been filled with the medium contained in the gas line, the section of gas line to be tested is sealed off from the gas line, a pressure loss indicated by the pressure indicating unit over a given period in the gas line section is equalised by displacing the pressure piston (2), and a scale (15) disposed on the pressure cylinder (1) indicates the amount of the leakage by the position of the pressure piston (2),
characterised in that in the pressure cylinder casing there is a through-opening (17) through which a ball (19) contained in the pressure piston and under tension from a spring (18) protrudes when the pressure piston (2) is at the zero setting, so as to operate a timing device (16) disposed on the casing of the pressure cylinder.

2. Apparatus according to claim 1, characterised in that the diameter of the through-opening (17) on the inner face of the pressure cylinder casing is smaller than the diameter of the ball.

3. Apparatus according to claim 1, characterised in that disposed in the pressure cylinder casing is a slot-like recess (13) which extends in the longitudinal direction of the pressure cylinder (1) and into which a lug (14) on the pressure piston (2) is adapted to slide.

4. Apparatus according to claim 3, characterised in that the lug (14) is constructed as a scale pointer for the indicator scale (15).

5. Apparatus according to any of claims 1 to 4, characterised in that the pressure piston (2) is hollow on the inside and the end that is remote from the pressure surface (3) it incorporates an internal thread in which the external thread of the piston rod (4) is threaded.

6. Apparatus according to claim 5, characterised in that the end of the piston rod (4) that protrudes from the pressure piston (2) is permanently joined to a driving rod, crank handle, operating wheel (5) or the like, mounted so as to rotate on the pressure cylinder (1).

## Revendications

1. Dispositif pour mesurer le débit de fuite d'un tronçon de canalisation de gaz avec une pression d'épreuve constante dans le tronçon de canalisation de gaz à contrôler, le dispositif consistant en un cylindre de pression (1), un piston de pression (2), une tige de piston (4) et un dispositif indicateur de pression (9), dans lequel, après le raccordement du cylindre de pression au tronçon de canalisation de gaz (12) à contrôler et après le remplissage du cylindre de pression avec le fuide existant dans la canalisation de gaz, le tronçon de canalisation de gaz à contrôler est isolé de la canalisation de gaz, une perte de pression, indiquée par le dispositif indicateur de pression, dans le tronçon de canalisation de gaz sur une durée déterminée est comprensée par un déplacement du piston de pression (2), le débit de fuite, représenté par la position du piston de pression (2), étant indiqué par une graduation (15) disposée contre le cylindre de pression (1), caractérisé en ce qu'il est prévu un orifice de passage (17) dans le corps du cylindre de pression, dans lequel pénètre, dans la position de repos du piston de pression (2), une bille (19) placée dans le piston de pression sous la tension d'un ressort (18), pour l'actionnement d'un dispositif d'horloge (16), placé contre le corps du cylindre de pression.

2. Dispositif selon la revendication 1, caractérisé en ce que le diamètre de l'orifice de passage (17) est, au niveau de la face interne du corps de cylindre de pression, plus petit que le diamètre de la bille.

3. Dispositif selon la revendication 1, caractérisé en ce qu'il est prévu, dans le corps du cylindre de pression, un évidemment (13) en forme de fente qui s'étend dans le sens longitudinal du cylindre de pression (1) et dans lequel est guidé, de manière à coulisser, un bec (14) disposé sur le piston de pression (2).

4. Dispositif selon la revendication 3, caractérisé en ce que le bec (14) est conformé en tant qu'indicateur de graduation pour La graduation indicatrice (15).

5. Dispositif selon l'une des revendications 1 à 4, caractérisé en ce que le piston de pression (2) est réalisé creux à L'intérieur et en ce qu'il présente, à son extrémité du côté opposé à la surface de pression (3), un filetage intérieur, dans lequel est retenu par vissage le filetage extérieur de La tige de piston (4).

6. Dispositif selon la revendication 5, caractérisé en ce que l'extrémité de la tige de piston (4) faisant saillie à partir du piston de pression (2) est fermement reliée à une bielle, à une manivelle, à un volant de manoeuvre (5) ou analogue, qui est monté sur le cylindre de pression (1) de manière à pouvoir tourner.
